# EUROPEAN PATENT SPECIFICATION

(11) **EP 0 526 929 B1**
(45) Date of publication and mention of the grant of the patent: **17.01.1996**
(21) Application number: 92202095.3
(22) Date of filing: 09.07.1992
(51) Int. Cl.: E21B 37/06

(54) **A method for preventing or retarding the formation of hydrates**
Verfahren zum Verhindern oder Zurückhalten von der Formung von Hydraten
Méthode pour l'empêchement ou la retardation de la formation d'hydrates

(30) Priority: 12.07.1991 GB 9115095
(43) Date of publication of application: 10.02.1993
(73) Proprietor: SHELL INTERNATIONALE RESEARCH MAATSCHAPPIJ B.V., NL-2596 HR Den Haag (NL)
(72) Inventor: Reynhout, Marinus Johannes, NL-1031 CM Amsterdam (NL); Kind, Cornelus Elbertus, NL-1031 CM Amsterdam (NL); Klomp, Ulfert Cornelis, NL-1031 CM Amsterdam (NL)

(56) References cited:
- EP-A- 0 323 774

## Description

The invention relates to a method for preventing or retarding the formation of hydrates or for reducing the tendency of hydrates to agglomerate during the transport of a fluid through a conduit.

It is well known in the art that the formation of hydrates in a conduit, e.g. a pipeline, during the transport of oil and gas is a serious problem, especially in areas with a low temperature in the winter season or in the sea. Generally the temperatures are so low that hydrate formation, due to the inevitable presence of co-produced water in the wells takes place, if no special steps are taken. Insulation decreases the chance of hydrate formation, but is expensive. If the field is relatively small and at long distance from the production platform the costs of insulation are too high to make the field economically attractive.

It is known to add anti-freeze compounds, like glycol or methanol, during transport. A disadvantage, however, is that large quantities of these compounds are required.

It has been described in EP-A-323 774 that certain non-ionic amphiphiles such as esters of polyols and carboxylic acids as well as imide-groups containing non-ionic amphiphiles can be used as additives in compositions which retard formation of hydrates.

There has now been found a new group of compounds, the alkyl glycosides which have not this disadvantage, since they may be used in very small quantities which do not need to be recovered. Moreover, these compounds change the crystal morphology of the hydrates in an advantageous manner.

The invention relates to a method for preventing or retarding the formation of hydrates or for reducing the tendency of hydrates to agglomerate, during the transport of a fluid comprising water and hydrocarbon, through a conduct, which method comprises adding to the fluid an alkyl glycoside.

The fluid may be a liquid or a gas, but is preferably a gas such as methane, ethane, propane, butane or isobutane. The fluid may be originated with oil wells as well as gas wells. The source may also produce natural gas.

Depending upon the pressure hydrates may be formed at temperatures well above the freezing point of water. Ethane hydrates, for example, are formed at pressures between 10 and 30 bar (1 and 3 MPa) and temperatures between 4 °C and 14 °C. Formation and agglomeration of hydrate crystals will thus easily occur in pipelines in a cold atmosphere. Formation of hydrate crystals as well as agglomeration are not limited to gas wells, but occur also in oil wells, if water and gas are present in the fluid.

The alkyl glycosides, used in the process according to the invention have been discussed in Kirk-Othmer, Encyclopedia of Chemical Technology, 1951, under the heading "Glycosides", Volume 7, pages 263-273.

Alcohols conjugated with reducing sugars form alkyl glycosides, e.g. alkyl α-D-glucopyranoside: 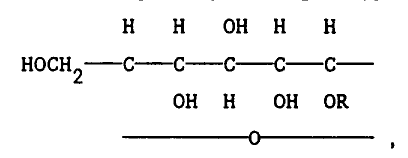 in which R represents the alkyl group and the linkage is through the anomeric carbon atom of the sugar radical.

The term glycoside is generic and the presence of a particular sugar residue is indicated by the appropriate term, as glucoside, galactoside, fructoside, etc.

The glycoside may be considered to be derived from a monosaccharide, a disaccharide, a trisaccharide or even an oligosaccharide containing up to 9 sugar units. In the formula above one sugar unit is given.

The alkyl group may be any alkyl group from a methyl group up to a C₃₀-alkyl group, preferably a C₆-C₂₄ alkyl group, more preferably a C₈-C₁₈ alkyl group. They may be derived from primary mono-hydric alcohols, containing the same number of carbon atoms. Commercially available mixtures of primary mono-hydric alcohols prepared via the oligomerization of ethylene and hydroformylation or oxidation and hydrolysis of the resulting higher olefins are preferred. Examples of such alcohols are mixtures of C₉-, C₁₀- and C₁₁-alkanols; mixtures of C₁₂- and C₁₃-alkanols; mixtures of C₁₂-, C₁₃-, C₁₄- and C₁₅-alkanols; mixtures of C₁₄- and C₁₅-alkanols; mixtures of C₁₀- and C₁₂-alkanols; mixtures of C₁₂- and C₁₄-alkanols; mixtures of C₁₆- and C₁₈-alkanols; mixtures of C₁₆-, C₁₈- and C₂₀-alkanols; mixtures of C₁₄-, C₁₆- and C₁₈-alkanols and also alkanols and/or alkenols prepared by reduction of naturally occurring fatty esters.

The sugar component of the glycoside may be derived from a monosaccharide, e.g. glucose, mannose, galactose or fructose. The resulting glycoside is then called a glucoside, mannoside, galactoside or a fructoside. The monosaccharides are also pentoses.

If the sugar component of the glycoside is derived from a disaccharide, the glycosides are lactoside, maltoside or gentiobioside. Sucrose does not form a glycoside. The first three of these disaccharides are reducing sugars. Sucrose is non-reducing, since no hemiacetal hydroxyl is available.

The alkyl glycosides may comprise one sugar unit or more, even up to 9 sugar units, e.g. an alkyl polyglucoside may comprise 1 to 5 sugar units (in the form of repeating units). The alkyl glycosides are used in amounts of 0.01% up to 2%, preferably 0.1% to 0.5%, by weight calculated on the amount of water.

To study the influence of a small quantity of alkyl glycosides on the nucleation temperature, kinetics of crystal growth and morphology of the crystals, a mini laboratory test loop was built to mimic transportation of a fluid comprising water and hydrocarbon under high pressure through a pipeline. The observations are made under dynamic test conditions. Hydrate formation and pipeline blocking by hydrates was observed, meanwhile temperatures were measured.

The mini laboratory test loop consisted of a 16 metre pipeline coil (diameter 6 mm), which was connected to a 2 litre high pressure autoclave, the latter connected to an ethane supply system. The autoclave also contained a stirrer. The temperature in the pipeline was controlled via a thermostated waterbath. A pump situated in the pipeline provided a circulation stream through the pipeline from the autoclave via the pipeline back into the autoclave.

The pressure drop along the pipeline was measured with a Honeywell differential pressure transmitter. At three places the temperature was recorded: pipeline coil inlet, pipeline coil outlet and autoclave.

The pump was a plunger pump with three pumping heads, two in phase pumping half their volume and one 180 degrees out of phase pumping the full volume, so that a continuous flow profile was obtained. In another series of experiments a gear pump was used.

The medium consisted of demineralized water and n-decane, pressure being maintained by ethane at 20 bar. The system contained varying amounts of water and decane. The test conditions were:

| | |
|---|---|
| system pressure | 20 bar |
| autoclave temperature | 12 °C |
| pumping volume | 6.5 l/h |
| autoclave stirrer | 650 rpm |
| cooling rate waterbath | 5 °C/h. |

To simulate actual field conditions, a mixture of water and decane was pressurized with 20 bar pressure ethane gas resulting in hydrate formation at a temperature below 12 °C.

The system contains 400 ml and 800 ml water respectively and 800 ml n-decane.

After filling the autoclave with water and n-decane the system is pressurized with ethane to 20 bar while stirring the mixture. The temperature of the autoclave and of the waterbath are set to 12 °C and during one hour the mixture was pumped through the pipeline to approximate equilibrium. During this hour the ethane was dissolved, the pressure was kept constant at 20 bar by continuously supplying ethane. During the further experiment the waterbath was cooled to a temperature at which blocking in the coil occurs by hydrate formation or to a temperature of 2 °C, both at a cooling rate of 5 °C/h. If there is no blocking the cooling procedure is continued for 20 minutes. After blocking the pump was stopped and the temperature of the coil was increased in steps of 2 °C (or near hydrate equilibrium temperature with steps of 1 °C). After 10 minutes the pump was restarted. If there was no movement within 2 minutes, the pump was stopped and the sequence was repeated until restart occurred.

Depending upon the amount of water the system was blocked at a higher or a lower temperature. In undoped test runs using ethane, water and n-decane as model components the 16 m pipeline was blocked at a temperature of 6 °C (average), whereas for an alkyl glucoside doped system pipeline operation was possible down to 0 °C.

The alkyl glucosides are introduced into the system together with the water.

In the following tables the results of the experiments are given:

### Example 1, 2 and Comparative Example A

**Table I**

| Additive | Concentration percent by weight based on water | Blocking temperature (°C) | Restart temperature (°C) |
|---|---|---|---|
| 1 DOBANOL 91-1G | 0.25 | 5.3 | 11.5 |
| 2 DOBANOL 91-3G | 0.25 | 3.9 | 12.0 |
| A None | - | 7.3 | 11.1 |

tests with 800 ml water and 800 ml n-decane.
plunger pump.
DOBANOL 91-1G is DOBANOL 91, a synthetic alcohol with C₉, C₁₀ and C₁₁ carbon atoms, of which the alkyl oligo glucoside has an average degree of oligomerization (DP) of 1.5.
DOBANOL 91-3G is DOBANOL 91, of which the alkyl oligo glucoside has an average degree of oligomerization (DP) of 2.5.
DOBANOL is a trade mark.

### Example 3 and Comparative Example B

**Table II**

| Additive | Concentration percent by weight based on water | Blocking temperature (°C) | Restart temperature (°C) |
|---|---|---|---|
| 3 DOBANOL 91-3G | 0.25 | <0.0 | 11.7 |
| B None | - | 4 | 11 |

tests with 400 ml water and 800 ml n-decane.
gear pump.

## Claims

1. A method for preventing or retarding the formation of hydrates or for reducing the tendency of hydrates to agglomerate, during the transport of a fluid comprising water and hydrocarbon, through a conduit, characterised in that the method comprises adding to the fluid an alkyl glycoside.

2. A method as claimed in claim 1 wherein the fluid comprises one or more hydrocarbons consisting of the group: methane, ethane, propane, butane and isobutane.

3. A method as claimed in claim 1 or 2 wherein the fluid comprises natural gas.

4. A method as claimed in one or more of the claims 1-3 wherein the alkyl glycoside is a C₆-C₂₄ alkyl glycoside, preferably a C₈-C₁₈ alkyl glycoside.

5. A method as claimed in claim 1 or 4 wherein the glycoside is derived from a monosaccharide, a disaccharide, a trisaccharide or an oligosaccharide containing up to 9 sugar units.

6. A method as claimed in claim 1 and 5 wherein the alkyl glycoside is derived from a reducing saccharide.

7. A method as claimed in claim 5 or 6 wherein the glycoside is a glucoside, mannoside, galactoside, or fructoside.

8. A method as claimed in claim 5 or 6 wherein the glycoside is a lactoside, a maltoside or a gentiobioside.

9. A method as claimed in claims 5-7 wherein the alkyl glycoside is an alkyl polyglucoside containing 1 to 5 sugar units.

10. A method for preventing or retarding the formation of hydrates or for reducing the tendency of hydrates to agglomerate as claimed in claim 1, wherein use is made of a synthetic alcohol with C₉, C₁₀ and C₁₁ carbon atoms, of which the alkyl oligoglucoside has an average degree of oligomerisation of 1.5 or 2.5.

## Patentansprüche

1. Verfahren zur Verhinderung oder Verzögerung der Bildung von Hydraten oder zur Verringerung der Tendenz von Hydraten zur Agglomeration während des Transports eines Wasser und Kohlenwasserstoff enthaltenden Fluids durch eine Leitung, dadurch gekennzeichnet, daß bei dem Verfahren das Fluid mit einem Alkylglykosid versetzt wird.

2. Verfahren nach Anspruch 1, wobei das Fluid einen oder mehrere Kohlenwasserstoffe aus der Reihe Methan, Ethan, Propan, Butan und Isobutan enthält.

3. Verfahren nach Anspruch 1 oder 2, wobei das Fluid Erdgas enthält.

4. Verfahren nach einem oder mehreren der Ansprüche 1-3, wobei es sich bei dem Alkylglykosid um ein C₆-C₂₄-Alkylglykosid, vorzugsweise ein C₈-C₁₈-Alkylglykosid handelt.

5. Verfahren nach Anspruch 1 oder 4, wobei das Glykosid sich von einem Monosaccharid, einem Disaccharid, einem Trisaccharid oder einem Oligosaccharid mit bis zu 9 Zuckereinheiten ableitet.

6. Verfahren nach Anspruch 1 und 5, wobei das Alkylglykosid sich aus einem reduzierenden Saccharid ableitet.

7. Verfahren nach Anspruch 5 oder 6, wobei es sich bei dem Glykosid um ein Glukosid, Mannosid, Galactosid oder Fructosid handelt.

8. Verfahren nach Anspruch 5 oder 6, wobei es sich bei dem Glykosid um ein Lactosid, ein Maltosid, oder ein Gentiobiosid handelt.

9. Verfahren nach Ansprüchen 5-7, wobei es sich bei dem Alkylglykosid um ein Alkylpolyglukosid mit 1 bis 5 Zuckereinheiten handelt.

10. Verfahren zur Verhinderung oder Verzögerung der Bildung von Hydraten oder zur Verringerung der Tendenz von Hydraten zur Agglomerierung nach Anspruch 1, wobei man sich eines synthetischen Alkohols mit C₉-, C₁₀- und C₁₁-Kohlenstoffatomen bedient, dessen Alkyloligoglucosid einen durchschnittlichen Oligomerisierungsgrad von 1,5 oder 2,5 aufweist.

## Revendications

1. Méthode pour l'empêchement ou la retardation de la formation d'hydrates ou pour la réduction de la tendance des hydrates à s'agglomérer, au cours du transport d'un fluide comprenant de l'eau et de l'hydrocarbure, par un conduit, caractérisée en ce que la méthode comprend l'addition au fluide d'un alkylglycoside.

2. Méthode selon la revendication 1, caractérisée en ce que le fluide comprend un ou plusieurs hydrocarbures constitués du groupe: méthane, éthane, propane, butane et isobutane.

3. Méthode selon la revendication 1 ou 2, caractérisée en ce que le fluide comprend du gaz naturel.

4. Méthode selon une ou plusieurs des revendications 1-3, caractérisée en ce que l'alkylglycoside est un alkyleglycoside en C₆-C₂₄, de préférence un alkyle glycoside en C₈-C₁₈.

5. Méthode selon la revendication 1 ou 4, caractérisée en ce que le glycoside est dérivé d'un monosaccharide, d'un disaccharide, d'un trisaccharide ou d'un oligosaccharide contenant jusqu'à 9 motifs de sucre.

6. Méthode selon les revendications 1 et 5, caractérisée en ce que l'alkylglycoside est dérivé d'un saccharide réducteur.

7. Méthode selon la revendication 5 ou 6, caractérisée en ce que le glycoside est un glucoside, un manoside, un galactoside ou un fructoside.

8. Méthode selon la revendication 5 ou 6, caractérisée en ce que le glycoside est un lactoside, un maltoside ou un gentiobioside.

9. Méthode selon les revendications 5-7, caractérisée en ce que l'alkylglycoside est un alkylpolyglucoside contenant de 1 à 5 motifs de sucre.

10. Méthode pour l'empêchement ou la retardation de la formation d'hydrates ou pour la réduction de la tendance des hydrates à s'agglomérer selon la revendication 1, caractérisée en ce qu'on utilise un alcool de synthèse ayant des atomes de carbone en C₉, C₁₀ et C₁₁, dont l'alkyloligoglucoside présente un degré d'oligomérisation moyen de 1,5 ou 2,5.
